# EUROPEAN PATENT APPLICATION

(11) **EP 4 407 357 A1**
(43) Date of publication of application: **31.07.2024**
(21) Application number: 22882800.0
(22) Date of filing: 17.10.2022
(51) Int. Cl.: G02B 6/42, G02F 1/035

(54) **ELECTRO-OPTICAL MODULATOR, OPTICAL MODULE, AND OPTICAL TRANSMITTING DEVICE**

(30) Priority: 21.10.2021 CN 202111229067
(71) Applicant: Huawei Technologies Co., Ltd., Shenzhen, Guangdong 518129 (CN)
(72) Inventor: ZHANG, Peijie, Shenzhen, Guangdong 518129 (CN); GUI, Chengcheng, Shenzhen, Guangdong 518129 (CN); LI, Yanbo, Shenzhen, Guangdong 518129 (CN)
(74) Representative: Grünecker Patent- und Rechtsanwälte PartG mbB
(86) International application number: PCT/CN2022/125656
(87) International publication number: WO 2023/066194

(57) **Abstract**

An electro-optic modulator (210), an optical module (201), and an optical transmitting device (110) are provided to reduce an optical loss in a process of modulating an optical signal and improve modulation efficiency when maintaining a high modulation bandwidth. The electro-optic modulator (210) includes a first electrode and a second electrode that are located on a surface of a base board. The electro-optic modulator (210) further includes a transmission optical waveguide (216). An electric field between the first electrode and the second electrode is used to modulate an optical signal transmitted by the transmission optical waveguide (216). The first electrode includes a first conducting layer (231) and a second conducting layer (232), and the second conducting layer (232) is located between the base board and the first conducting layer (231). An electrical conductivity of the first conducting layer (231) is greater than an electrical conductivity of the second conducting layer (232), and an optical-absorption coefficient of the first conducting layer (231) is greater than an optical-absorption coefficient of the second conducting layer (232).

## Description

This application claims priority to Chinese Patent Application No. 202111229067.9, filed with the China National Intellectual Property Administration on October 21, 2021 and entitled "ELECTRO-OPTIC MODULATOR, OPTICAL MODULE, AND OPTICAL TRANSMITTING DEVICE", which is incorporated herein by reference in its entirety.

### TECHNICAL FIELD

This application relates to the field of optical communications technologies, and in particular, to an electro-optic modulator, an optical module, and an optical transmitting device.

### BACKGROUND

Currently, an optical communications technology is an important bearer technology in the Internet world and one of the core technologies in the information era. In the optical communications technology, an electro-optic modulator is one of the key components of optical interconnection, optical computing, and an optical communication system.

Currently, the electro-optic modulator includes a base board, a signal electrode and a ground electrode that are located on a surface of the base board, and a transmission optical waveguide located between the signal electrode and the ground electrode that are adjacent to each other. An electrical signal transmitted by the signal electrode generates an electric field between the signal electrode and the ground electrode. A change of the electric field can modulate an optical signal transmitted by the transmission optical waveguide.

The signal electrode is used as an example. The signal electrode is made of metal. Due to absorption of the optical signal by the metal, a shorter distance between the signal electrode and the transmission optical waveguide causes a larger optical loss. To reduce the optical loss, the distance between the signal electrode and the transmission optical waveguide needs to be increased. However, a longer distance between the signal electrode and the transmission optical waveguide indicates lower modulation efficiency.

### SUMMARY

Embodiments of the present invention provide an electro-optic modulator, an optical module, and an optical transmitting device. This can reduce an optical loss and improve modulation efficiency when maintaining a high modulation bandwidth.

According to a first aspect of embodiments of the present invention, an electro-optic modulator is provided. The electro-optic modulator includes a first electrode and a second electrode that are located on a surface of a base board, and a transmission optical waveguide. An electric field between the first electrode and the second electrode is used to modulate an optical signal transmitted by the transmission optical waveguide. The first electrode includes a first conducting layer and a second conducting layer, and the second conducting layer is located between the base board and the first conducting layer. An electrical conductivity of the first conducting layer is greater than an electrical conductivity of the second conducting layer. An optical-absorption coefficient of the first conducting layer is greater than an optical-absorption coefficient of the second conducting layer. The first electrode may be a signal electrode or a ground electrode.

Because the optical-absorption coefficient of the first conducting layer is greater than the optical-absorption coefficient of the second conducting layer, the second conducting layer causes a small optical loss, and a spacing between the first electrode and the transmission optical waveguide can be shortened. Because the first electrode can be closer to the transmission optical waveguide, the electric field can function more strongly on the transmission optical waveguide. This effectively improves modulation efficiency. In addition, because the electrical conductivity of the first conducting layer is greater than the electrical conductivity of the second conducting layer, the first conducting layer with the higher electrical conductivity has higher conductive performance. This reduces a microwave loss and increases a modulation bandwidth. It can be learned that the first conducting layer with the higher electrical conductivity can compensate for the microwave loss caused by the second conducting layer with the lower electrical conductivity. Because the spacing between the first electrode and the transmission optical waveguide is shortened, a size of the electro-optic modulator can be effectively reduced, and an integration level of the electro-optic modulator can be effectively improved.

Based on the first aspect, in an optional implementation, the second electrode includes a third conducting layer and a fourth conducting layer. The fourth conducting layer is located between the base board and the third conducting layer. An electrical conductivity of the third conducting layer is greater than an electrical conductivity of the fourth conducting layer. An optical-absorption coefficient of the third conducting layer is greater than an optical-absorption coefficient of the fourth conducting layer. In a case, the first electrode is a signal electrode, and the second electrode is a ground electrode. In another case, the first electrode is a ground electrode, and the second electrode is a signal electrode.

It can be learned that both the first electrode and the second electrode shown in this aspect can cause a small optical loss, and this improves the modulation efficiency more effectively. In addition, the size of the electro-optic modulator is effectively reduced, and the integration level of the electro-optic modulator is improved.

Based on the first aspect, in an optional implementation, a plurality of first upper-layer protrusion parts protrude from a side surface that is of the first conducting layer and that faces the third conducting layer. A first upper-layer recess part is formed between any two adjacent first upper-layer protrusion parts. A plurality of second upper-layer protrusion parts protrude from a side surface that is of the third conducting layer and that faces the first conducting layer. A second upper-layer recess part is formed between any two adjacent second upper-layer protrusion parts. Each first upper-layer protrusion part is opposite to one second upper-layer recess part, and each second upper-layer protrusion part is opposite to one first upper-layer recess part.

It can be learned that because the first upper-layer protrusion part and the second upper-layer protrusion part are staggered, a spacing between the first conducting layer and the third conducting layer can be effectively increased. This effectively reduces a parasitic capacitance between the first electrode and the second electrode.

Based on the first aspect, in an optional implementation, a plurality of first lower-layer protrusion parts protrude from a side surface that is of the second conducting layer and that faces the fourth conducting layer. A first lower-layer recess part is formed between any two adjacent first lower-layer protrusion parts. A plurality of second lower-layer protrusion parts protrude from a side surface that is of the fourth conducting layer and that faces the second conducting layer. A second lower-layer recess part is formed between any two adjacent second lower-layer protrusion parts. Each first lower-layer protrusion part is opposite to one second lower-layer recess part, and each second lower-layer protrusion part is opposite to one first lower-layer recess part.

It can be learned that because the first lower-layer protrusion part and the second lower-layer protrusion part are staggered, a spacing between the third conducting layer and the fourth conducting layer can be effectively increased. This effectively reduces the parasitic capacitance between the first electrode and the second electrode.

Based on the first aspect, in an optional implementation, a projection position of each first upper-layer protrusion part included in the first conducting layer and a projection position of one first lower-layer protrusion part included in the second conducting layer coincide on the base board.

It can be learned that because the projection position of the first upper-layer protrusion part and the projection position of the first lower-layer protrusion part coincide on the base board, the parasitic capacitance between the first electrode and the second electrode is effectively reduced, and a difficulty in preparing the electro-optic modulator can be further reduced.

Based on the first aspect, in an optional implementation, a projection position of each second upper-layer protrusion part included in the third conducting layer and a projection position of one second lower-layer protrusion part included in the fourth conducting layer coincide on the base board.

It can be learned that the projection position of the second upper-layer protrusion part and the projection position of the second lower-layer protrusion part coincide on the base board, the parasitic capacitance between the first electrode and the second electrode is effectively reduced, and the difficulty in preparing the electro-optic modulator can be further reduced.

Based on the first aspect, in an optional implementation, the first electrode includes a plurality of upper-layer structure periods. Each upper-layer structure period includes at least one first upper-layer protrusion part and at least one first upper-layer recess part that are adjacent to each other. Different upper-layer structure periods have a same structure. Along an extension direction of the first electrode, in one unit length, there is a positive correlation relationship between a quantity of upper-layer structure periods included in the first electrode and a modulation bandwidth of the electro-optic modulator.

It can be learned that in a same unit length, a larger quantity of upper-layer structure periods included in the first electrode indicates a more continuous structure of the first electrode of the electro-optic modulator. Accordingly, the first electrode causes a lower microwave loss, so that the modulation bandwidth of the electro-optic modulator is larger. Similarly, in a same unit length, a smaller quantity of upper-layer structure periods included in the first electrode indicates a looser structure of the first electrode of the electro-optic modulator. Accordingly, the first electrode causes a higher microwave loss, so that the modulation bandwidth of the electro-optic modulator is smaller.

Based on the first aspect, in an optional implementation, the first electrode includes a plurality of lower-layer structure periods. Each lower-layer structure period includes at least one first lower-layer protrusion part and at least one first lower-layer recess part that are adjacent to each other. Different lower-layer structure periods have a same structure. Along an extension direction of the first electrode, in one unit length, there is a positive correlation relationship between a quantity of lower-layer structure periods included in the first electrode and a modulation bandwidth of the electro-optic modulator.

It can be learned that in a same unit length, a larger quantity of lower-layer structure periods included in the first electrode indicates that a more continuous structure of the second electrode of the electro-optic modulator. Accordingly, the second electrode causes a lower microwave loss, so that the modulation bandwidth of the electro-optic modulator is larger. Similarly, in a same unit length, a smaller quantity of lower-layer structure periods included in the first electrode indicates a looser structure of the second electrode of the electro-optic modulator. Accordingly, the second electrode causes a higher microwave loss, so that the modulation bandwidth of the electro-optic modulator is smaller.

Based on the first aspect, in an optional implementation, the electro-optic modulator further includes an electric field constraint layer. The electric field constraint layer is located between the transmission optical waveguide and the first electrode. Alternatively, the electric field constraint layer is located between the transmission optical waveguide and the second electrode. Alternatively, the electric field constraint layer is located between the transmission optical waveguide and the first electrode, and the electric field constraint layer is further located between the transmission optical waveguide and the second electrode. The electric field constraint layer is configured to enable the electric field to be distributed on the transmission optical waveguide.

It can be learned that because the electric field constraint layer can enable the electric field between the first electrode and the second electrode to be mainly distributed on the transmission optical waveguide, interaction between the electric field and an optical field of the optical signal transmitted by the transmission optical waveguide is enhanced, and the modulation efficiency is improved. In addition, because the electric field constraint layer is made of an insulation material, the electric field constraint layer does not have conductive performance, and does not cause a microwave loss. It can be learned that the electro-optic modulator includes the electric field constraint layer, and does not reduce the modulation bandwidth.

Based on the first aspect, in an optional implementation, the transmission optical waveguide is located on the surface of the base board. The electric field constraint layer has a first side surface and a second side surface that are opposite to each other. The first side surface is adjacent to the first electrode. Alternatively, the first side surface is adjacent to the second electrode, and the second side surface is adjacent to the transmission optical waveguide.

Based on the first aspect, in an optional implementation, the electric field constraint layer extends to at least one of the following positions: the first upper-layer protrusion part included in the first electrode, the first upper-layer recess part included in the first electrode, the first lower-layer protrusion part included in the first electrode, the first lower-layer recess part included in the first electrode, the second upper-layer protrusion part included in the second electrode, the second upper-layer recess part included in the second electrode, the second lower-layer protrusion part included in the second electrode, or the second lower-layer recess part included in the second electrode.

Based on the first aspect, in an optional implementation, the transmission optical waveguide and the first electrode are located on two sides of the base board, and/or the transmission optical waveguide and the second electrode are located on two sides of the base board. The base board further includes an electric field constraint layer, the electric field constraint layer is located between the transmission optical waveguide and the first electrode, and/or the electric field constraint layer is located between the transmission optical waveguide and the second electrode. The electric field constraint layer is configured to enable the electric field to be mainly distributed on the transmission optical waveguide.

Based on the first aspect, in an optional implementation, the electric field constraint layer is made of an insulation material with a high dielectric constant. A material refractive index of the electric field constraint layer is less than a material refractive index of the transmission optical waveguide.

It can be learned that because the material refractive index of the electric field constraint layer is less than the material refractive index of the transmission optical waveguide, the electric field constraint layer can distribute the electric field on the transmission optical waveguide to improve the modulation efficiency. In addition, because the electric field constraint layer is made of the insulation material with the high dielectric constant, the electric field constraint layer does not cause a microwave loss.

Based on the first aspect, in an optional implementation, a side surface that is of the first conducting layer and that faces the base board includes a first area and a second area. The first area is in contact with the second conducting layer. The second area is in contact with the base board.

Based on the first aspect, in an optional implementation, a side surface that is of the third conducting layer and that faces the base board includes a third area and a fourth area. The third area is in contact with the fourth conducting layer. The fourth area is in contact with the base board.

According to a second aspect of embodiments of the present invention, an optical module is provided. The optical module includes a light source and the electro-optic modulator according to any implementation of the first aspect. The light source is connected to a transmission optical waveguide. The light source is configured to send an optical signal to the transmission optical waveguide.

According to a third aspect of embodiments of the present invention, an optical transmitting device is provided. The optical transmitting device includes a processor and the optical module shown in the second aspect. The processor is connected to a signal electrode. The signal electrode is a first electrode or a second electrode. The processor is configured to send an electrical signal to the signal electrode. The electrical signal is used to modulate an optical signal transmitted by a transmission optical waveguide.

### BRIEF DESCRIPTION OF DRAWINGS

FIG. 1 is an example diagram of a structure of an optical communication system according to this application;
FIG. 2a is an example diagram of a structure of an optical transmitting device according to an embodiment of this application;
FIG. 2b is a first cross-sectional example diagram of a structure of an electro-optic modulator according to an embodiment of this application;
FIG. 2c is a first top-view example diagram of a structure of an electro-optic modulator according to an embodiment of this application;
FIG. 3a is a second cross-sectional example diagram of a structure of an electro-optic modulator according to an embodiment of this application;
FIG. 3b is a second top-view example diagram of a structure of an electro-optic modulator according to an embodiment of this application;
FIG. 4a is an overall example diagram of a structure of an electro-optic modulator according to an embodiment of this application;
FIG. 4b is a third top-view example diagram of a structure of an electro-optic modulator according to an embodiment of this application;
FIG. 5 is a fourth top-view example diagram of a structure of an electro-optic modulator according to an embodiment of this application;
FIG. 6a is a third cross-sectional example diagram of a structure of an electro-optic modulator according to an embodiment of this application;
FIG. 6b is a fifth top-view example diagram of a structure of an electro-optic modulator according to an embodiment of this application;
FIG. 7a is a sixth top-view example diagram of a structure of an electro-optic modulator according to an embodiment of this application;
FIG. 7b is a seventh top-view example diagram of a structure of an electro-optic modulator according to an embodiment of this application; and
FIG. 8 is a fourth cross-sectional example diagram of a structure of an electro-optic modulator according to an embodiment of this application.

### DESCRIPTION OF EMBODIMENTS

The following clearly and completely describes the technical solutions in embodiments of the present invention with reference to the accompanying drawings in embodiments of the present invention. It is clear that the described embodiments are merely a part rather than all of embodiments of the present invention. All other embodiments obtained by persons skilled in the art based on embodiments of the present invention without creative efforts shall fall within the protection scope of the present invention.

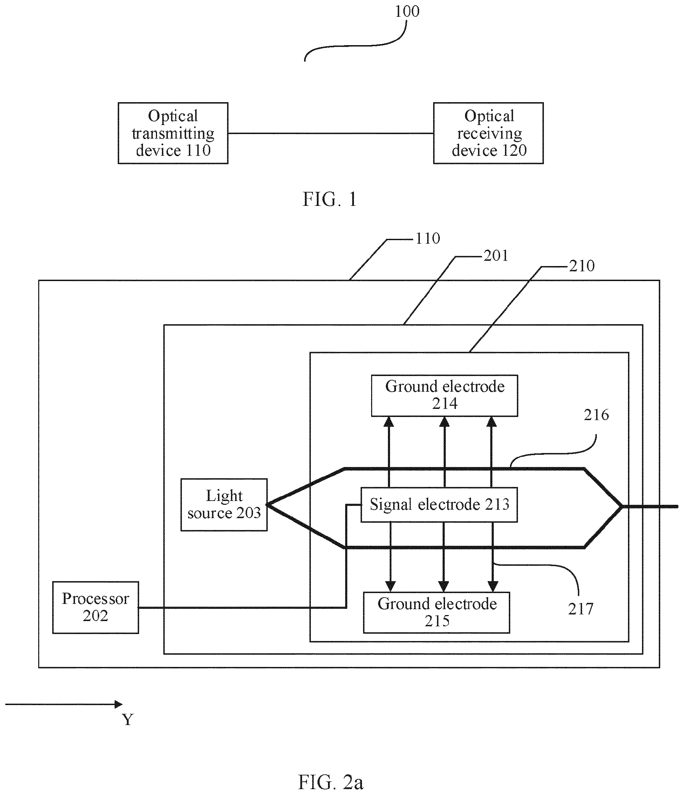

This application provides an electro-optic modulator. The electro-optic modulator can improve modulation efficiency when reducing an optical loss. For better understanding, the following describes, with reference to FIG. 1, a structure of an optical communication system to which the electro-optic modulator provided in this application is applied.

FIG. 1 is an example diagram of a structure of an optical communication system according to this application. As shown in FIG. 1, an optical communication system 100 includes an optical transmitting device 110 and an optical receiving device 120. A specific quantity of optical receiving devices 120 connected to the optical transmitting device 110 is not limited in this application. The optical transmitting device 110 shown in this application may alternatively be referred to as a transmitter machine, a transmitting end, a transmitting end device, or the like. The optical receiving device 120 may alternatively be referred to as a receiving machine, a receiving end, a receiving end device, or the like.

This application is described by using an example in which the optical communication system 100 is applied to an optical fiber access network and specifically applied to a passive optical fiber network (passive optical network, PON). It can be learned that in a transmission direction of a downlink service optical signal, the optical transmitting device 110 is an optical line terminal (optical line terminal, OLT), and the optical receiving device 120 is an optical network unit (optical network unit, ONU). In a transmission direction of an uplink service optical signal, the optical transmitting device 110 is an ONU, and the optical receiving device 120 is an OLT.

A specific type of a network to which the optical communication system is applied is not limited in this application. For another example, the system may further be applied to a data center network, a wavelength division multiplexing network, an optical transport network (optical transport network, OTN), or the like. If the system is applied to an OTN, both the optical transmitting device 110 and the optical receiving device 120 may be OTN devices.

FIG. 2a is an example diagram of a structure of an optical transmitting device according to an embodiment of this application. As shown in FIG. 2a, the optical transmitting device 110 specifically includes an optical module 201 and a processor 202. The optical module 201 includes a light source 203 and an electro-optic modulator 210. The electro-optic modulator may be a Mach-Zehnder interferometer (Mach-Zehnder interferometer, MZI) or a micro-ring modulator.

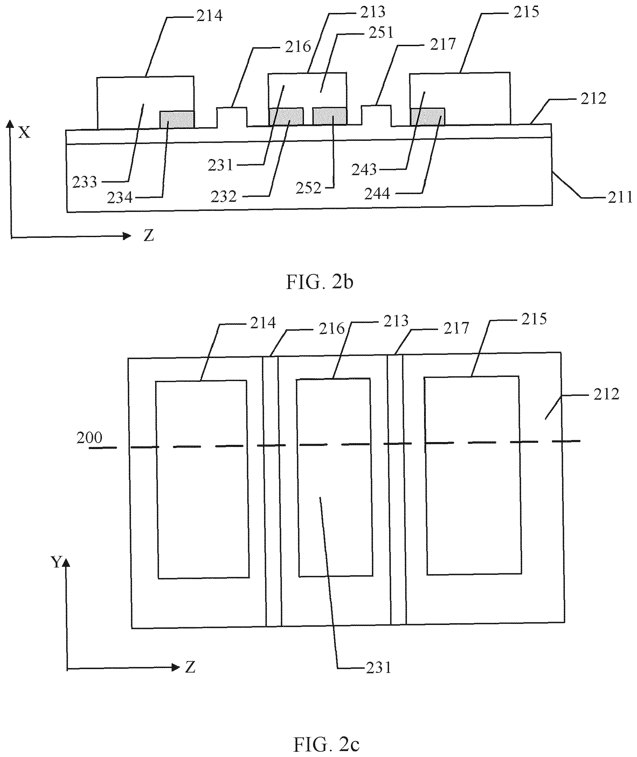

FIG. 2b is a first cross-sectional example diagram of a structure of an electro-optic modulator according to an embodiment of this application. FIG. 2c is a first top-view example diagram of a structure of an electro-optic modulator according to an embodiment of this application. FIG. 2b is a cross-sectional view obtained by cutting the electro-optic modulator along a transversal 200 in FIG. 2c.

The electro-optic modulator shown in this embodiment includes a base board. The base board may include two layers, and a bottom layer is a substrate 211 and an optical waveguide layer 212 located on a surface of the substrate 211. The substrate 211 may include silicon (silicon, Si), and the substrate 211 further includes silicon dioxide (silicon dioxide, SiOz) deposited on a silicon surface. A material of the substrate 211 is not limited in this embodiment, provided that the substrate 211 has a stable structure and has less optical absorption performance. For example, the substrate 211 may further be made of a material such as zirconium boride (zirconium boride, ZrB₂), gallium arsenide (gallium arsenide, GaAs), glass, and magnesium oxide. A transmission optical waveguide located between a signal electrode and a ground electrode can be formed on the optical waveguide layer 212. A photoelectric material used to form the optical waveguide layer 212 shown in this embodiment may be lithium niobate (lithium niobate, LiNbO₃).

The electro-optic modulator shown in this embodiment includes a signal electrode 213 located on a surface of the optical waveguide layer 212, and a ground electrode 214 and a ground electrode 215 that are located on two sides of the signal electrode 213. In this embodiment, descriptions of quantities of signal electrodes and ground electrodes included in the electro-optic modulator 210 are optional examples, and are not limited, provided that the electro-optic modulator 210 includes at least one signal electrode and at least one ground electrode.

The electro-optic modulator 210 further includes a transmission optical waveguide 216 and a transmission optical waveguide 217. The transmission optical waveguide 216 is located between the ground electrode 214 and the signal electrode 213. The transmission optical waveguide 217 is located between the signal electrode 213 and the ground electrode 215. The signal electrode 213 is connected to the processor 202. The ground electrode 214 and the ground electrode 215 are grounded.

The transmission optical waveguide 216 is used as an example. In a process of preparing the electro-optic modulator, etching processing may be performed on the optical waveguide layer 212 to form the transmission optical waveguide 216. In a direction perpendicular to a surface of the base board, the transmission optical waveguide 216 is formed accordingly as the optical waveguide layer 212 extends along a direction away from the surface of the base board. It can be learned that the transmission optical waveguide 216 is formed by protruding from the surface of the optical waveguide layer 212.

Optionally, in another example, the base board included in the electro-optic modulator may include only the substrate. The transmission optical waveguide is formed on a surface of the substrate and between the signal electrode and the ground electrode. In this example, a photoelectric material of the transmission optical waveguide may be one or more of the following: monocrystalline silicon (silicon, Si), amorphous silicon (amorphous silicon, a-Si), silicon nitride (silicon nitride, SiN), aluminum nitride (aluminum nitride, AlN), titanium oxide (titanium oxide, TiO₂), tantalum oxide (tantalum pentoxide, Ta₂O₃), or the like.

The light source 203 is separately connected to the transmission optical waveguide 216 and the transmission optical waveguide 217. The light source 203 is configured to separately send a to-be-modulated optical signal to the transmission optical waveguide 216 and the transmission optical waveguide 217. A specific type of the light source 203 is not limited in this embodiment. For example, the light source 203 may be a laser, a semiconductor light-emitting diode (light-emitting diode, LED), or a laser diode (laser diode, LD). The processor 202 is connected to the signal electrode 213, and the processor 202 is configured to send an electrical signal to the signal electrode 213. The electrical signal is used to modulate an optical signal transmitted by the transmission optical waveguide 216 and the transmission optical waveguide 217. A type of the processor 202 is not limited in this embodiment. For example, the processor 202 shown in this embodiment may be one or more chips, or one or more integrated circuits. For example, the processor 202 may be one or more field-programmable gate arrays (field-programmable gate arrays, FPGAs), an application-specific integrated chip (application-specific integrated circuit, ASIC), a system-on-a-chip (system-on-a-chip, SoC), a central processing unit (central processing unit, CPU), a network processor (network processor, NP), a digital signal processing (digital signal processing, DSP) circuit, a microcontroller (microcontroller unit, MCU), a programmable controller (programmable logic device, PLD), or another integrated chip, or any combination of the foregoing chips or processors.

The following describes, by using an example, a specific process in which the electro-optic modulator modulates an optical signal. When the signal electrode 213 receives an electrical signal from the processor 202, an electric field can be generated between the signal electrode 213 and the ground electrode 214. A direction of the electric field is from the signal electrode 213 to the ground electrode 214. For details, refer to a direction of an arrow between the signal electrode 213 and the ground electrode 214 shown in FIG. 2a. Similarly, an electric field is generated between the signal electrode 213 and the ground electrode 215. A direction of the electric field is from the signal electrode 213 to the ground electrode 215. For details, refer to a direction of an arrow between the signal electrode 213 and the ground electrode 215 shown in FIG. 2a.

The signal electrode 213 and the ground electrode 214 are used as an example. The electric field between the signal electrode 213 and the ground electrode 214 is applied to the transmission optical waveguide 216, to modulate an optical signal transmitted in the transmission optical waveguide 216. Specifically, the to-be-modulated optical signal is transmitted along the transmission optical waveguide 216. In this case, a transmission direction of the optical signal is perpendicular to the direction of the electric field between the signal electrode 213 and the ground electrode 214. A change of the electric field between the signal electrode 213 and the ground electrode 214 changes an effective refractive index of the transmission optical waveguide 216. The change of the effective refractive index of the transmission optical waveguide 216 changes a phase of the optical signal transmitted by the transmission optical waveguide 216, to implement modulation of the optical signal transmitted by the transmission optical waveguide 216. For descriptions of a modulation process of the transmission optical waveguide 217, refer to the transmission optical waveguide 216. Details are not described again.

There is a negative correlation relationship between a spacing between the signal electrode 213 and the ground electrode 214 and modulation efficiency of the optical signal transmitted by the transmission optical waveguide 216. It can be learned that a larger spacing between the signal electrode 213 and the ground electrode 214 indicates lower modulation efficiency of the optical signal transmitted by the transmission optical waveguide 216. Similarly, a smaller spacing between the signal electrode 213 and the ground electrode 214 indicates higher modulation efficiency of the optical signal transmitted by the transmission optical waveguide 216. For descriptions of modulation efficiency of the optical signal transmitted by the transmission optical waveguide 216, refer to descriptions of the modulation efficiency of the optical signal transmitted by the transmission optical waveguide 216. Details are not described again.

This embodiment provides a first electrode. The first electrode is of a stacked structure, so that an optical loss can be further reduced when a spacing between the first electrode and the transmission optical waveguide 216 is shortened. The first electrode may be the signal electrode 213 or the ground electrode 214. It can be learned that when the spacing between the first electrode and the transmission optical waveguide 216 is shortened, the modulation efficiency of modulating the optical signal transmitted by the transmission optical waveguide 216 can be improved.

The following describes the first electrode of the stacked structure. For better understanding, the following uses an example in which the first electrode is the signal electrode 213 for description. In another example, the first electrode may alternatively be the ground electrode 214.

In this embodiment, when the spacing between the signal electrode 213 and the transmission optical waveguide 216 is shortened, absorption of the signal electrode 213 on the optical signal transmitted by the transmission optical waveguide 216 can be further effectively reduced. This reduces an optical loss of the optical signal transmitted by the transmission optical waveguide 216. Therefore, refer to FIG. 2b. The signal electrode 213 shown in this embodiment includes a first conducting layer 231 and a second conducting layer 232. The second conducting layer 232 is located between the base board and the first conducting layer 231. The second conducting layer 232 is located on a side surface that is of the signal electrode 213 and that is close to the transmission optical waveguide 216.

The first conducting layer 231 is made of a metallic material. For example, the first conducting layer 231 may be made of at least one of the following metallic materials: gold (Au), silver (Ag), palladium (Pd), rhodium (Rh), iridium (Ir), osmium (Os), ruthenium (Ru), or the like.

The following describes a condition that the second conducting layer 232 needs to meet. In this embodiment, an electrical conductivity of the first conducting layer 231 is greater than an electrical conductivity of the second conducting layer 232, and an optical-absorption coefficient of the first conducting layer 231 is greater than an optical-absorption coefficient of the second conducting layer 232. The second conducting layer 232 that meets the condition may be made of transparent conductive oxide (transparent conductive oxide, TCO). The TCO mainly includes oxides such as cadmium oxide (CdO), indium oxide (In₂O₃), tin dioxide (SnO₂), zinc oxide (ZnO), and corresponding composite compounds.

In this embodiment, the optical-absorption coefficient of the first conducting layer 231 is greater than the optical-absorption coefficient of the second conducting layer 232, and the second conducting layer 232 is closer to the transmission optical waveguide 216 than the first conducting layer 231. In this case, an optical loss generated by the second conducting layer 232 is less than an optical loss generated by the first conducting layer 231 that is only made of a metallic material. In addition, because the electrical conductivity of the first conducting layer 231 is greater than the electrical conductivity of the second conducting layer 232, a microwave loss in a process of transmitting an electrical signal at the first conducting layer 231 is reduced, and a modulation bandwidth is increased.

For better understanding, comparison descriptions are made between the signal electrode that is of the stacked structure and that is shown in this embodiment and a signal electrode that is made of only a metallic material and that is shown in an existing solution.

The optical-absorption coefficient of the second conducting layer 232 of the signal electrode 213 shown in this embodiment is less than an optical-absorption coefficient of the signal electrode shown in the existing solution. In this case, under a same optical loss condition, for example, 2 decibel/centimeter (dB/cm), the second conducting layer 232 shown in this embodiment may be closer to the transmission optical waveguide 216. It can be learned that the signal electrode 213 shown in this embodiment can be closer to the transmission optical waveguide than the signal electrode shown in the existing solution. Because the signal electrode 213 in this embodiment can be closer to the transmission optical waveguide, the electric field can be more strongly applied to the transmission optical waveguide 216. This effectively improves the modulation efficiency.

The signal electrode 213 shown in this embodiment includes the first conducting layer 231 and the second conducting layer 232 that are of stacked structures. The second conducting layer 232 has a low electrical conductivity. For example, the electrical conductivity of the second conducting layer 232 is within an interval of 10³ ~ 10⁵ Siemens/meter (s/m). The second conducting layer 232 with the low electrical conductivity increases a microwave loss in electrical signal transmission. However, the signal electrode 213 further includes the first conducting layer 231 having a high electrical conductivity. For example, the electrical conductivity of the first conducting layer 231 is equal to 10⁷ s/m. The first conducting layer 231 with the high electrical conductivity has high conductive performance. This reduces the microwave loss and increases the modulation bandwidth. It can be learned that in this embodiment, the first conducting layer 231 with the high electrical conductivity is stacked on the second conducting layer 232, to compensate for the microwave loss caused by the second conducting layer 232 with the low electrical conductivity.

To better understand a spatial position relationship between the first conducting layer 231 and the second conducting layer 232 included in the signal electrode 213, the following provides descriptions with reference to specific directions shown in FIG. 2a, FIG. 2b, and FIG. 2c. The transmission optical waveguide 216 shown in this embodiment extends along a Y direction. It can be learned that the optical signal by the transmission optical waveguide 216 is transmitted along the Y direction. The first conducting layer 231 and the second conducting layer 232 shown in this embodiment are stacked along an X direction. The X direction is perpendicular to the Y direction, and the X direction is perpendicular to the surface of the base board.

Along a Z direction, a length relationship between the first conducting layer 231 and the second conducting layer 232 is not limited in this embodiment. The Z direction is perpendicular to both the X direction and the Y direction. For example, in the examples shown in FIG. 2b and FIG. 2c, along the Z direction, a length of the second conducting layer 232 is less than a length of the first conducting layer 231, and the second conducting layer 232 is accommodated in the first conducting layer 231. Along the X direction, a side surface of the first conducting layer 231 is aligned with a side surface of the second conducting layer 232. It can be learned that in the top view shown in FIG. 2c, the second conducting layer 232 is completely hidden in the first conducting layer 231.

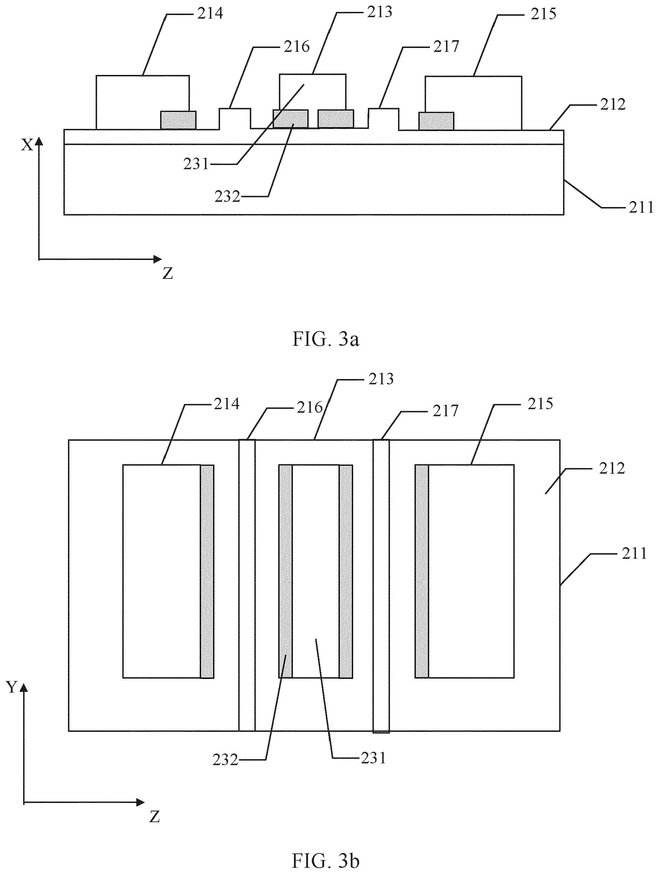

It should be noted that the structures shown in FIG. 2b and FIG. 2c are examples, and are not limited. For example, as shown in FIG. 3a and FIG. 3b, FIG. 3a is a second cross-sectional example diagram of a structure of an electro-optic modulator according to an embodiment of this application, and FIG. 3b is a second top-view example diagram of a structure of an electro-optic modulator according to an embodiment of this application. In this example, along the Z direction, the second conducting layer 232 protrudes out of the first conducting layer 231. It can be learned that along the X direction, the side surface of the first conducting layer 231 is not aligned with the side surface of the second conducting layer 232, and the side surface of the second conducting layer 232 is closer to the transmission optical waveguide 216 than the side surface of the first conducting layer 231.

It can be learned that in a case in which along the Z direction, the length of the second conducting layer 232 is less than the length of the first conducting layer 231, a partial area of a side surface that is of the first conducting layer 231 and that faces the base board is in contact with the second conducting layer 232. Specifically, the side surface that is of the first conducting layer 231 and that faces the base board has a first area and a second area that are connected. The first area is in direct contact with the second conducting layer 232, and the second area is in direct contact with the optical waveguide layer 212.

In another example, along the Z direction, the length of the second conducting layer 232 may alternatively be greater than or equal to the length of the first conducting layer 231. It can be learned that in this example, a whole area of the side surface that is of the first conducting layer 231 and that faces the base board are in contact with only the second conducting layer 232.

It can be learned from the foregoing descriptions that the first electrode (a signal electrode or a ground electrode) shown in this embodiment is of the stacked structure, so that a spacing between the first electrode and the transmission optical waveguide can be shortened. In a case in which modulation efficiency is improved, an optical loss can be further reduced and a modulation bandwidth can be further increased. In addition, in this embodiment, because the spacing between the first electrode included in the electro-optic modulator and the transmission optical waveguide is small, a size of the electro-optic modulator is effectively reduced, and an integration level of the electro-optic modulator is improved.

In the foregoing descriptions, that only the first electrode of the electro-optic modulator is of the stacked structure is used as an example. A second electrode included in the electro-optic modulator in this embodiment may also be of a stacked structure. For example, if the first electrode is the signal electrode, the second electrode is the ground electrode. For another example, if the first electrode is the ground electrode, the second electrode is the signal electrode. It can be learned that both the ground electrode and the signal electrode included in the electro-optic modulator in this embodiment are of the stacked structures.

For details, refer to FIG. 2b. That the second electrode is the ground electrode 214 is used as an example. The ground electrode 214 specifically includes a third conducting layer 233 and a fourth conducting layer 234. The fourth conducting layer 234 is located between the base board and the third conducting layer 233. An electrical conductivity of the third conducting layer 233 is greater than an electrical conductivity of the fourth conducting layer 234, and an optical-absorption coefficient of the third conducting layer 233 is greater than an optical-absorption coefficient of the fourth conducting layer 234. For descriptions of a specific structure of the ground electrode 214, refer to the foregoing descriptions of the structure of the signal electrode 213. Details are not described again.

Along the Z direction, a length relationship between the third conducting layer 233 and the fourth conducting layer 234 is not limited in this embodiment. In this embodiment, that a length of the third conducting layer 233 is greater than a length of the fourth conducting layer 234 is used as an example. It can be learned that a partial area of a side surface that is of the third conducting layer 233 and that faces the base board is in contact with the fourth conducting layer 234. Specifically, the side surface that is of the third conducting layer 233 and that faces the base board has a third area and a fourth area that are connected. The third area is in direct contact with the fourth conducting layer 234, and the fourth area is in direct contact with the optical waveguide layer 212.

It can be learned that in this example, the spacing between the first electrode and the transmission optical waveguide and a spacing between the second electrode and the transmission optical waveguide can be simultaneously shortened. Compared with an example in which only the first electrode is of the stacked structure, in this example, the modulation efficiency can be more effectively improved, the modulation bandwidth can be more effectively increased, and the optical loss and the microwave loss can be more effectively reduced. In addition, the size of the electro-optic modulator can be further reduced, and the integration level of the electro-optic modulator can be further improved.

Still refer to FIG. 2b. The ground electrode 215 further includes a third conducting layer 243 and a fourth conducting layer 244. For descriptions of the third conducting layer 243 and the fourth conducting layer 244 that are included in the ground electrode 215, refer to the descriptions of the third conducting layer 233 and the fourth conducting layer 234 that are included in the ground electrode 214. In this example, a side surface that is of the signal electrode 213 and that faces the ground electrode 215 includes a first conducting layer 251 and a second conducting layer 252. For descriptions of the first conducting layer 251 and the second conducting layer 252 included in the signal electrode 213, refer to the foregoing descriptions of the first conducting layer 231 and the second conducting layer 232 included in the signal electrode 213. It can be learned that the signal electrode 213, the ground electrode 214, and the ground electrode 215 shown in this embodiment are all of the stacked structures.

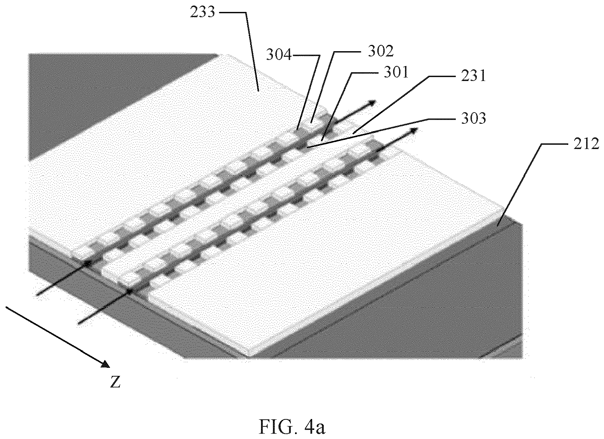

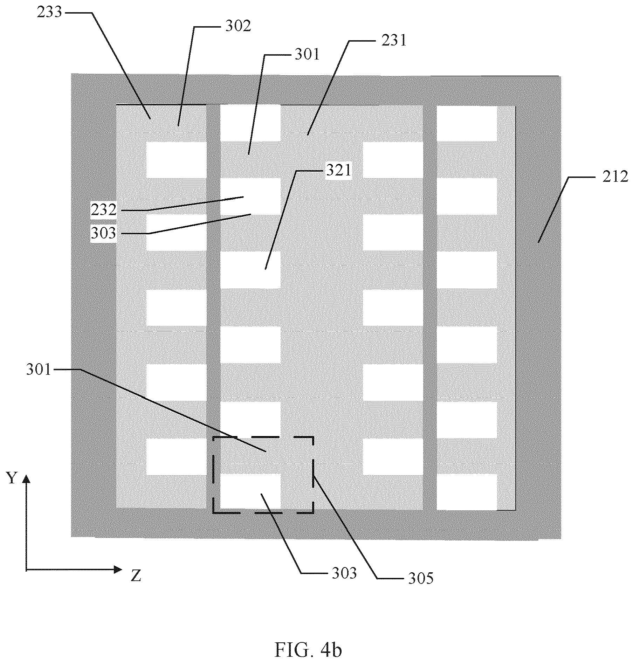

As shown in FIG. 4a and FIG. 4b, how to reduce a parasitic capacitance between a signal electrode and a ground electrode is described. FIG. 4a is an overall example diagram of a structure of an electro-optic modulator according to an embodiment of this application. FIG. 4b is a third top-view example diagram of a structure of an electro-optic modulator according to an embodiment of this application.

The electro-optic modulator shown in this embodiment includes the signal electrode 213 and the ground electrode 214 that are of the stacked structures. For descriptions of the signal electrode 213 and the ground electrode 214, refer to FIG. 2a to FIG. 3b. Details are not described again. Both the first conducting layer 231 and the third conducting layer 233 shown in this embodiment are of concave-convex structures. Specifically, the concave-convex structure of the first conducting layer 231 means that a plurality of first upper-layer protrusion parts 301 protrude from a side surface that is of the first conducting layer 231 and that faces the third conducting layer 233. A first upper-layer recess part 303 is formed between any two adjacent first upper-layer protrusion parts 301. The concave-convex structure of the third conducting layer 233 means that a plurality of second upper-layer protrusion parts 302 protrude from a side surface that is of the third conducting layer 233 and that faces the first conducting layer 231. A second upper-layer recess part 304 is formed between any two adjacent second upper-layer protrusion parts 302.

To reduce a parasitic capacitance between the signal electrode 213 and the ground electrode 214, each first upper-layer protrusion part 301 is opposite to one second upper-layer recess part 304. Similarly, each second upper-layer protrusion part 302 is opposite to one first upper-layer recess part 303. It can be learned that in this embodiment, the first upper-layer protrusion part 301 is not opposite to the second upper-layer protrusion part 302. Because each first upper-layer protrusion part 301 is opposite to one second upper-layer recess part 304, and each second upper-layer protrusion part 302 is opposite to one first upper-layer recess part 303, along the Z direction, the first upper-layer protrusion part 301 and the second upper-layer protrusion part 302 are staggered. This increases a spacing between the first conducting layer 231 and the third conducting layer 233 as much as possible. In this way, the parasitic capacitance between the signal electrode 213 and the ground electrode 214 is effectively reduced. For specific descriptions of the Z direction, refer to FIG. 2b. Details are not described again.

The first upper-layer protrusion part 301 is used as an example. A specific shape and size of the first upper-layer protrusion part 301 are not limited in this embodiment. For example, as shown in FIG. 4a and FIG. 4b, an example in which the first upper-layer protrusion part 301 is in a square shape is used, and this is not limited. In another example, the first upper-layer protrusion part 301 may alternatively be in a trapezoid shape, an arc shape, a rhombus shape, a T shape, a taper shape, or the like. For descriptions of a shape of the second upper-layer protrusion part 302, refer to descriptions of the shape of the first upper-layer protrusion part 301. Details are not described again.

The first upper-layer protrusion part 301 is still used as an example. One first upper-layer protrusion part 301 is adjacent to one first upper-layer recess part 303. It can be learned that the adjacent first upper-layer protrusion parts 301 are in a discontinuous state. This increases a microwave loss of the first conducting layer 231.

The following describes how to reduce a microwave loss of the signal electrode 213 shown in this embodiment. The signal electrode 213 shown in this embodiment includes a plurality of upper-layer structure periods. Each upper-layer structure period includes at least one first upper-layer protrusion part 301 and at least one first upper-layer recess part 303 that are adjacent to each other. Different upper-layer structure periods have a same structure. For example, as shown in FIG. 4b, one upper-layer structure period 305 included in the signal electrode 213 includes one first upper-layer protrusion part 301 and one first upper-layer recess part 303 that are adjacent to each other. A quantity of first upper-layer protrusion parts 301 and a quantity of first upper-layer recess parts 303 that are included in each upper-layer structure period are not limited in this embodiment, provided that positions of the first upper-layer protrusion part 301 and the first upper-layer recess part 303 that are included in one upper-layer structure period are continuous.

That different upper-layer structure periods shown in this embodiment have the same structure means that sizes of the first upper-layer protrusion parts 301 located at a same position in different structure periods are the same. The first upper-layer protrusion parts 301 located at the same position in different structure periods are from the 1^{st} upper-layer protrusion parts 301 located in different structure periods, and by analogy, to the last upper-layer protrusion parts 301 located in different structure periods. The size of the first upper-layer protrusion part 301 is a length of the first upper-layer protrusion part 301 along the Z direction, a length of the first upper-layer protrusion part 301 along the Y direction, and a height of the first upper-layer protrusion part 301 along the X direction.

That different upper-layer structure periods shown in this embodiment have the same structure further means that sizes of the first upper-layer recess parts 303 located at a same position in different structure periods are the same. The first upper-layer recess parts 303 located at the same position in different structure periods are from the 1^{st} upper-layer recess parts 303 located in different structure periods, and by analogy, to the last upper-layer recess parts 303 located in different structure periods. The size of the first upper-layer recess part 303 is a length of the first upper-layer recess part 303 along the Z direction and a length of the first upper-layer recess part 303 along the Y direction.

In this embodiment, the microwave loss of the first upper-layer protrusion part 301 may be reduced through the upper-layer structure periods. Specifically, along an extension direction (namely, the Y direction) of the signal electrode 213, in one unit length, there is a positive correlation relationship between a quantity of upper-layer structure periods included in the signal electrode 213 and a modulation bandwidth of the electro-optic modulator. The unit length is only a reference standard for a length, and a specific length of the unit length is not limited in this embodiment.

For a signal electrode of a stacked structure, in a same unit length, a larger quantity of upper-layer structure periods indicates a more continuous structure of the signal electrode of the electro-optic modulator. A lower microwave loss caused by the signal electrode leads to a larger modulation bandwidth of the electro-optic modulator. Similarly, in a same unit length, a smaller quantity of upper-layer structure periods included indicates a looser structure of the signal electrode of the electro-optic modulator. A higher microwave loss caused by the signal electrode leads to a smaller modulation bandwidth of the electro-optic modulator.

It can be learned that in this embodiment, to increase the modulation bandwidth of the electro-optic modulator, in one unit length, the quantity of upper-layer structure periods included in the signal electrode 213 may be increased as much as possible.

As shown in this embodiment, an example in which the upper-layer structure period is used as a period for periodically arranging the first conducting layers 231 is used for description, and is not limited. In another example, the first upper-layer protrusion part 301 and the first upper-layer recess part 303 that are included in the first conducting layer 231 may also be arranged in a random manner. For details about how the ground electrode shown in this embodiment reduces the microwave loss, refer to descriptions of reducing the microwave loss by the signal electrode 213. Details are not described again.

Based on the structures of the first conducting layer 231 and the third conducting layer 233 shown in FIG. 4a and FIG. 4b, the following describes optional structures of the second conducting layer 232 and the fourth conducting layer 234 shown in this embodiment. The following uses a structure of the second conducting layer 232 as an example for description. For descriptions of the structure of the fourth conducting layer 234, refer to the following descriptions of the structure of the second conducting layer 232. Details are not described.

The second conducting layer 232 shown in this embodiment may be of a continuous strip structure. Along the Y direction, the second conducting layer 232 extends from a start position of the first conducting layer 231 to an end position of the first conducting layer 231. The descriptions of a shape of the second conducting layer 232 in this embodiment are an optional example, and are not limited, provided that the second conducting layer 232 is of a continuous structure. For example, the second conducting layer 232 may be in an arc shape. In this embodiment, along the Y direction, a length relationship between the first conducting layer 231 and the second conducting layer 232 is not limited. For example, along the Y direction, a length of the first conducting layer 231 is equal to a length of the second conducting layer 232. It can be learned that in the top view shown in FIG. 4b, a side surface that is of the second conducting layer 232 and that is away from the base board has a fifth area and a sixth area. The fifth area is in direct contact with the first upper-layer protrusion part 301. It can be learned from the top view shown in FIG. 4b that the sixth area 321 is directly exposed from the first upper-layer recess part 303.

It can be learned from the foregoing descriptions that to reduce the parasitic capacitance of the electro-optic modulator, the first conducting layer 231 and the third conducting layer 233 may be of periodic structures. In this embodiment, to further reduce the parasitic capacitance of the electro-optic modulator, the second conducting layer 232 and the fourth conducting layer 234 may alternatively be concave-convex structures.

Specifically, the concave-convex structure of the second conducting layer 232 means that a plurality of first lower-layer protrusion parts protrude from a side surface that is of the second conducting layer 232 and that faces the fourth conducting layer 234, and a first lower-layer recess part is formed between any two adjacent first lower-layer protrusion parts. For descriptions of structures of the first lower-layer protrusion part and the first lower-layer recess part, refer to the foregoing descriptions of the structures of the first upper-layer protrusion part 301 and the first upper-layer recess part 303. Details are not described again.

The concave-convex structure of the fourth conducting layer 234 means that a plurality of second lower-layer protrusion parts protrude from a side surface that is of the fourth conducting layer 234 and that faces the second conducting layer 232, and a second lower-layer recess part is formed between any two adjacent second lower-layer protrusion parts. For descriptions of structures of the second lower-layer protrusion part and the second lower-layer recess part, refer to the foregoing descriptions of the structures of the second upper-layer protrusion part 302 and the second upper-layer recess part 304. Details are not described again.

To reduce the parasitic capacitance between the signal electrode 213 and the ground electrode 214 to a greater extent, each first lower-layer protrusion part is opposite to one second lower-layer recess part. Similarly, each second lower-layer protrusion part is opposite to one first lower-layer recess part.

It can be learned that because each first lower-layer protrusion part is opposite to one first lower-layer recess part, and each second lower-layer protrusion part is opposite to one second lower-layer recess part, along the Z direction, the first lower-layer protrusion part and the second lower-layer protrusion part are staggered. This increases a spacing between the second conducting layer 232 and the fourth conducting layer 234 as much as possible. In this way, the parasitic capacitance between the signal electrode 213 and the ground electrode 214 is effectively reduced.

It can be learned that to reduce the parasitic capacitance between the signal electrode 213 and the ground electrode 214, both the first conducting layer 231 and the second conducting layer 232 are of periodic structures. The following optionally describes a position relationship between the concave-convex structure of the first conducting layer 231 and the concave-convex structure of the second conducting layer 232. For example, the concave-convex structure of the first conducting layer 231 coincides with the concave-convex structure of the second conducting layer 232. That the concave-convex structures coincide means that, under illumination of a same projection line, a projection position of each first upper-layer protrusion part 301 included in the first conducting layer 231 and a projection position of one first lower-layer protrusion part included in the second conducting layer 232 coincide on the base board. In addition, under the illumination of the same projection line, a projection position of each first upper-layer recess part 303 included in the first conducting layer 231 and a projection position of one first lower-layer recess part included in the second conducting layer 232 coincide on the base board. A specific direction of the projection line is not limited in this embodiment. For example, the projection line is a light ray perpendicular to a direction of the base board.

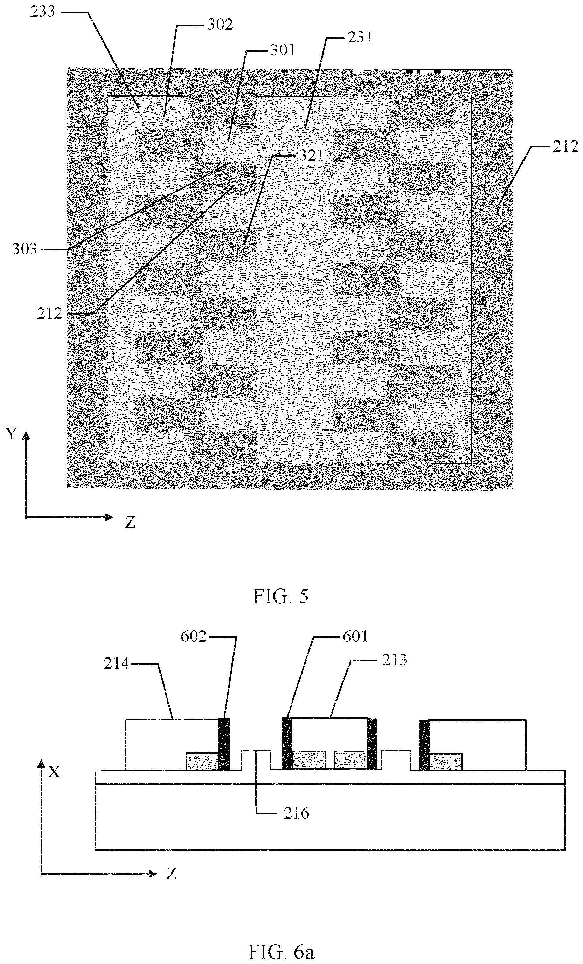

FIG. 5 is a fourth top-view example diagram of a structure of an electro-optic modulator according to an embodiment of this application. When the concave-convex structure of the first conducting layer 231 and the concave-convex structure of the second conducting layer 232 coincide, and the optical waveguide layer 212 is exposed from the first lower-layer recess part and the first upper-layer recess part 303 in sequence from a perspective of overlooking the electro-optic modulator. The concave-convex structure of the third conducting layer 233 and the concave-convex structure of the fourth conducting layer 234 shown in this embodiment coincide. For specific descriptions, refer to descriptions in which the concave-convex structure of the first conducting layer 231 and the concave-convex structure of the second conducting layer 232 coincide. Details are not described again.

Similarly, under the illumination of the same projection line, a projection position of each second upper-layer protrusion part 302 included in the third conducting layer 233 and a projection position of one second lower-layer protrusion part included in the fourth conducting layer 234 coincide on the base board. In addition, under the illumination of the same projection line, a projection position of each second upper-layer recess part included in the third conducting layer 233 and a projection position of one second lower-layer recess part included in the fourth conducting layer 234 coincide on the base board. For specific descriptions, refer to the foregoing descriptions of the concave-convex structure of the first conducting layer 231 and the second conducting layer 232. Details are not described again.

It can be learned that when the concave-convex structure of the first conducting layer 231 and the concave-convex structure of the second conducting layer 232 coincide, and the concave-convex structure of the third conducting layer 233 and the concave-convex structure of the fourth conducting layer 234 coincide, a spacing between the first upper-layer protrusion part 301 and the second upper-layer protrusion part 302, and a spacing between the first upper-layer protrusion part 301 and the second lower-layer protrusion part can be fully increased. In this way, the parasitic capacitance between the signal electrode 213 and the ground electrode 214 is effectively reduced. In addition, a difficulty in preparing the signal electrode and the ground electrode is reduced.

It should be noted that in this embodiment an example in which the concave-convex structure of the first conducting layer 231 and the concave-convex structure of the second conducting layer 232 coincide is used for description, and this is not limited. In another example, the concave-convex structure of the first conducting layer 231 and the concave-convex structure of the second conducting layer 232 may alternatively be staggered. For example, from a perspective of overlooking the electro-optic modulator, at least a part of one first lower-layer protrusion part included in the second conducting layer 232 is exposed from one first upper-layer recess part included in the first conducting layer 231.

The first lower-layer protrusion part is still used as an example. The following describes how to reduce the microwave loss of the signal electrode 213. The signal electrode 213 shown in this embodiment includes a plurality of lower-layer structure periods. Each lower-layer structure period includes at least one first lower-layer protrusion part and at least one first lower-layer recess part that are adjacent to each other. Different lower-layer structure periods have a same structure. For descriptions of the structures of the lower-layer structure periods, refer to the foregoing descriptions of the upper-layer structure periods. Details are not described again.

It can be learned that in this embodiment, the microwave loss of the first lower-layer protrusion part may be reduced through the lower-layer structure periods. Specifically, along an extension direction (namely, the Y direction) of the signal electrode 213, in one unit length, there is a positive correlation relationship between a quantity of lower-layer structure periods included in the signal electrode 213 and the modulation bandwidth of the electro-optic modulator. For descriptions of a process in which the microwave loss of the first lower-layer protrusion part is reduced through the lower-layer structure periods, refer to the foregoing descriptions in which the microwave loss of the first upper-layer protrusion part is reduced through the upper-layer structure periods. Details are not described again.

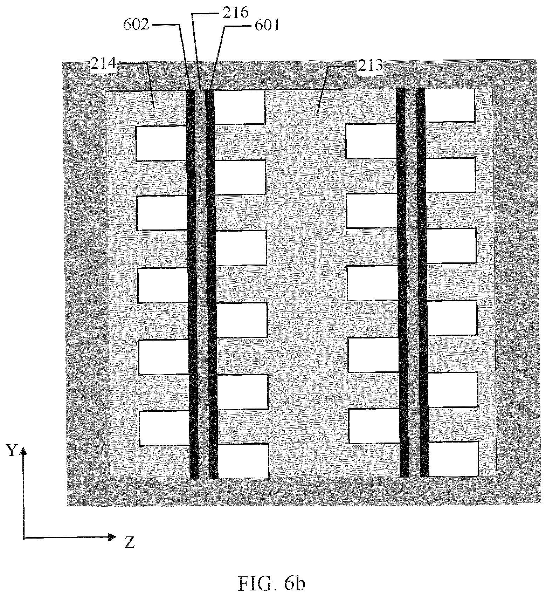

FIG. 6a is a third cross-sectional example diagram of a structure of an electro-optic modulator according to an embodiment of this application. FIG. 6b is a fifth top-view example diagram of a structure of an electro-optic modulator according to an embodiment of this application.

The electro-optic modulator shown in this embodiment further includes an electric field constraint layer. The following describes several optional structures of the electric field constraint layer.

In an optional structure 1, for the signal electrode 213 and the ground electrode 214, the electro-optic modulator shown in this embodiment includes a first electric field constraint layer 601 and a second electric field constraint layer 602. The first electric field constraint layer 601 is located between the transmission optical waveguide 216 and the signal electrode 213. The second electric field constraint layer 602 is located between the transmission optical waveguide 216 and the ground electrode 214. It should be noted that descriptions of a quantity of electric field constraint layers in this embodiment are an optional example, and are not limited. For example, the electro-optic modulator includes only the first electric field constraint layer 601 located between the transmission optical waveguide 216 and the signal electrode 213. For another example, the electro-optic modulator includes only the second electric field constraint layer 602 located between the transmission optical waveguide 216 and the ground electrode 214.

The following describes specific positions of the first electric field constraint layer 601 and the second electric field constraint layer 602. The first electric field constraint layer 601 shown in this embodiment has a first side surface and a second side surface that are opposite to each other. The first side surface and the second side surface that are opposite to each other are two side surfaces that are of the first electric field constraint layer 601 and that are opposite to each other along the Z direction. It can be learned that the first side surface faces the signal electrode 213, and the second side surface faces the transmission optical waveguide 216. The first side surface is adjacent to the signal electrode 213. Along the Z direction, a distance between the first side surface and the signal electrode 213 is not limited in this embodiment. For example, as shown in FIG. 6a and FIG. 6b, the first side surface is attached to the signal electrode 213. The second side surface is adjacent to the transmission optical waveguide 216. Along the Z direction, a distance between the second side surface and the transmission optical waveguide 216 is not limited in this embodiment. Similarly, the second electric field constraint layer 602 also has a first side surface and a second side surface that are opposite to each other. The first side surface of the second electric field constraint layer 602 is adjacent to the ground electrode 214, and the second side surface is adjacent to the transmission optical waveguide 216. For specific descriptions, refer to descriptions of the first side surface and the second side surface of the first electric field constraint layer 601. Details are not described again.

It can be learned that both the first electric field constraint layer 601 and the second electric field constraint layer 602 are of continuous structures. In other words, along the Y direction, the first electric field constraint layer 601 extends from a start position of the signal electrode 213 to an end position of the signal electrode 213. In this embodiment, a shape of the first electric field constraint layer 601 is described as an optional example, and is not limited, provided that the first electric field constraint layer 601 is of the continuous structure. For example, the first electric field constraint layer 601 may be in a long strip shape or an arc shape. Along the Y direction, a length relationship between the first electric field constraint layer 601 and the signal electrode 213 is not limited in this embodiment. For example, along the Y direction, a length of the first electric field constraint layer 601 is equal to a length of the signal electrode 213. For descriptions of a structure of the second electric field constraint layer 602 along the Y direction, refer to descriptions of the first electric field constraint layer 601. Details are not described again.

Optionally, as shown in FIG. 6a, along the X direction, a height of the first electric field constraint layer 601 is equal to a height of the signal electrode 213. It should be noted that in this embodiment, descriptions of a height relationship between the first electric field constraint layer 601 and the signal electrode 213 along the X direction are an optional example, and are not limited. For example, along the X direction, the height of the first electric field constraint layer 601 is greater than the height of the signal electrode 213.

A condition that the first electric field constraint layer 601 and the second electric field constraint layer 602 in this embodiment meet is that both the first electric field constraint layer 601 and the second electric field constraint layer 602 are made of an insulation material with a high dielectric constant. In addition, a material refractive index of the first electric field constraint layer 601 and a material refractive index of the second electric field constraint layer 602 are both less than a material refractive index of the transmission optical waveguide 216. For example, both the first electric field constraint layer 601 and the second electric field constraint layer 602 may be made of barium titanate (BaTiO₃).

The first electric field constraint layer 601 and the second electric field constraint layer 602 that meet the condition can enable the electric field between the signal electrode 213 and the ground electrode 214 to be mainly distributed on the transmission optical waveguide 216. This improves modulation efficiency of modulating an optical signal transmitted by the transmission optical waveguide 216. Specifically, the first electric field constraint layer 601 and the second electric field constraint layer 602 enable the electric field between the signal electrode 213 and the ground electrode 214 to be concentrated between the first electric field constraint layer 601 and the second electric field constraint layer 602 as much as possible. The transmission optical waveguide 216 is located between the first electric field constraint layer 601 and the second electric field constraint layer 602, and is closer to the first electric field constraint layer 601 than the signal electrode 213. Similarly, the transmission optical waveguide 216 is closer to the second electric field constraint layer 602 than the ground electrode 214. In this case, the electric field concentrated between the first electric field constraint layer 601 and the second electric field constraint layer 602 can be mainly concentrated on the transmission optical waveguide 216. This improves interaction between the electric field and an optical field of the optical signal transmitted by the transmission optical waveguide 216, and improves the modulation efficiency.

In addition, because both the first electric field constraint layer 601 and the second electric field constraint layer 602 shown in this embodiment are made of insulation materials, neither the first electric field constraint layer 601 nor the second electric field constraint layer 602 has conductive performance, and therefore no microwave loss is caused. It can be learned that the electro-optic modulator includes the electric field constraint layer, and does not reduce the modulation bandwidth.

In an optional structure 2, the electro-optic modulator shown in this example includes a plurality of electric field constraint layers 611. The electric field constraint layer 611 extends to at least one of the following positions: a side surface that is of the first upper-layer protrusion part of the signal electrode 213 and that faces the transmission optical waveguide 216, a side surface of the first upper-layer recess part of the signal electrode 213, a side surface that is of the first lower-layer protrusion part of the signal electrode 213 and that faces the transmission optical waveguide 216, a side surface of the first lower-layer recess part of the signal electrode 213, a side surface that is of the second upper-layer protrusion part of the ground electrode and that faces the transmission optical waveguide 216, a side surface of the second upper-layer recess part of the ground electrode, a side surface that is of the second lower-layer protrusion part of the ground electrode and that faces the transmission optical waveguide 216, or a side surface of the second lower-layer recess part of the ground electrode.

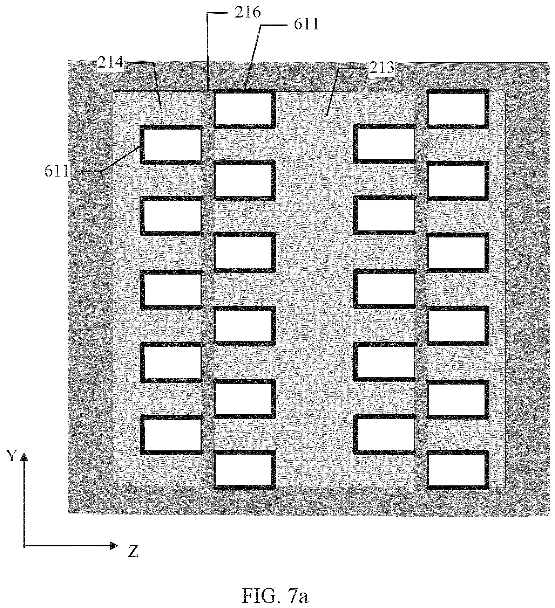

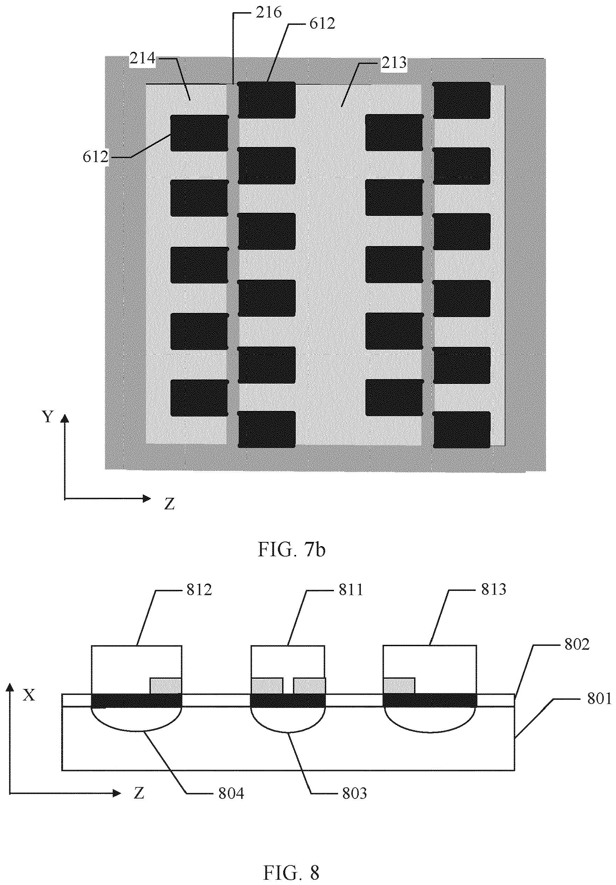

FIG. 7a is a sixth top-view example diagram of a structure of an electro-optic modulator according to an embodiment of this application. It can be learned that in this example, the electric field constraint layer 611 is attached to a side surface of each first upper-layer recess part, and the electric field constraint layer 611 is attached to a side surface of each second upper-layer recess part. FIG. 7b is a seventh top-view example diagram of a structure of an electro-optic modulator according to an embodiment of this application. It can be learned that in this example, an electric field constraint layer 612 is filled inside each first upper-layer recess part, and the electric field constraint layer 612 is filled inside each second upper-layer recess part. It should be noted that a specific quantity and a specific position of the electric field constraint layers 611 are not limited in this embodiment.

FIG. 8 is a fourth cross-sectional example diagram of an embodiment of a structure of an electro-optic modulator according to an embodiment of this application. As shown in FIG. 8, the base board of the electro-optic modulator includes an optical waveguide layer 801 and a substrate 802 located on a surface of the optical waveguide layer 801. For descriptions of specific materials of the substrate 802 and the optical waveguide layer 801, refer to FIG. 2b. Details are not described again.

A surface of the substrate 802 includes a signal electrode 811, and a ground electrode 812 and a ground electrode 813 that are located on two sides of the signal electrode 811. The signal electrode 811, the ground electrode 812, and the ground electrode 813 shown in this embodiment are of stacked structures. For descriptions of an electrode structure of the stacked structure, refer to FIG. 2a to FIG. 3b. Details are not described again.

The electro-optic modulator shown in this embodiment further includes a transmission optical waveguide. For example, the electro-optic modulator in this embodiment includes a transmission optical waveguide 803 formed on the optical waveguide layer 801. The optical waveguide layer 801 may be deposited, etched, polarized, or the like, to form the transmission optical waveguide 803. The transmission optical waveguide 803 and the signal electrode 811 are located on two sides of the substrate 802. In other words, along the X direction, the transmission optical waveguide 803 and the signal electrode 811 are opposite to each other. In this embodiment, an example in which along the X direction, the transmission optical waveguide 803 is disposed at a position opposite to the signal electrode 811 is used for description. This is not limited. In another example, along the X direction, a transmission optical waveguide 804 is also disposed at a position opposite to the ground electrode 812.

The electro-optic modulator shown in this embodiment further includes an electric field constraint layer. Specifically, along the X direction, if the transmission optical waveguide 803 is disposed at a position opposite to the signal electrode 811, the substrate 802 includes a first through groove. The first through groove is located between the signal electrode 811 and the transmission optical waveguide 803. The electric field constraint layer is disposed in the first through groove. For another example, along the X direction, the transmission optical waveguide 804 is disposed at a position opposite to the ground electrode 812. In this case, the substrate 802 includes a second through groove. The second through groove is located between the ground electrode 812 and the transmission optical waveguide 804, and the electric field constraint layer is disposed in the second through groove. For descriptions of a specific material and a function of the electric field constraint layer shown in this embodiment, refer to FIG. 6a. Details are not described again.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of the present invention.

## Claims

1. An electro-optic modulator, wherein the electro-optic modulator comprises a first electrode and a second electrode that are located on a surface of a base board, the electro-optic modulator further comprises a transmission optical waveguide, and an electric field between the first electrode and the second electrode is used to modulate an optical signal transmitted by the transmission optical waveguide; and
the first electrode comprises a first conducting layer and a second conducting layer, the second conducting layer is located between the base board and the first conducting layer, an electrical conductivity of the first conducting layer is greater than an electrical conductivity of the second conducting layer, and an optical-absorption coefficient of the first conducting layer is greater than an optical-absorption coefficient of the second conducting layer.

2. The electro-optic modulator according to claim 1, wherein the second electrode comprises a third conducting layer and a fourth conducting layer, the fourth conducting layer is located between the base board and the third conducting layer, an electrical conductivity of the third conducting layer is greater than an electrical conductivity of the fourth conducting layer, and an optical-absorption coefficient of the third conducting layer is greater than an optical-absorption coefficient of the fourth conducting layer.

3. The electro-optic modulator according to claim 2, wherein a plurality of first upper-layer protrusion parts protrude from a side surface that is of the first conducting layer and that faces the third conducting layer, and a first upper-layer recess part is formed between any two adjacent first upper-layer protrusion parts;
a plurality of second upper-layer protrusion parts protrude from a side surface that is of the third conducting layer and that faces the first conducting layer, and a second upper-layer recess part is formed between any two adjacent second upper-layer protrusion parts; and
each first upper-layer protrusion part is opposite to one second upper-layer recess part, and each second upper-layer protrusion part is opposite to one first upper-layer recess part.

4. The electro-optic modulator according to claim 3, wherein a plurality of first lower-layer protrusion parts protrude from a side surface that is of the second conducting layer and that faces the fourth conducting layer, and a first lower-layer recess part is formed between any two adjacent first lower-layer protrusion parts;
a plurality of second lower-layer protrusion parts protrude from a side surface that is of the fourth conducting layer and that faces the second conducting layer, and a second lower-layer recess part is formed between any two adjacent second lower-layer protrusion parts; and
each first lower-layer protrusion part is opposite to one second lower-layer recess part, and each second lower-layer protrusion part is opposite to one first lower-layer recess part.

5. The electro-optic modulator according to claim 4, wherein a projection position of each first upper-layer protrusion part comprised in the first conducting layer and a projection position of one first lower-layer protrusion part comprised in the second conducting layer coincide on the base board.

6. The electro-optic modulator according to claim 4 or 5, wherein a projection position of each second upper-layer protrusion part comprised in the third conducting layer and a projection position of one second lower-layer protrusion part comprised in the fourth conducting layer coincide on the base board.

7. The electro-optic modulator according to claim 3 or 5, wherein the first electrode comprises a plurality of upper-layer structure periods, each upper-layer structure period comprises at least one first upper-layer protrusion part and at least one first upper-layer recess part that are adjacent to each other, different upper-layer structure periods have a same structure, and along an extension direction of the first electrode, in one unit length, there is a positive correlation relationship between a quantity of upper-layer structure periods comprised in the first electrode and a modulation bandwidth of the electro-optic modulator.

8. The electro-optic modulator according to claim 4 or 5, wherein the first electrode comprises a plurality of lower-layer structure periods, each lower-layer structure period comprises at least one first lower-layer protrusion part and at least one first lower-layer recess part that are adjacent to each other, different lower-layer structure periods have a same structure, and along an extension direction of the first electrode, in one unit length, there is a positive correlation relationship between a quantity of lower-layer structure periods comprised in the first electrode and a modulation bandwidth of the electro-optic modulator.

9. The electro-optic modulator according to any one of claims 1 to 8, wherein the electro-optic modulator further comprises an electric field constraint layer, the electric field constraint layer is located between the transmission optical waveguide and the first electrode, and/or the electric field constraint layer is located between the transmission optical waveguide and the second electrode, and the electric field constraint layer is configured to enable the electric field to be distributed on the transmission optical waveguide.

10. The electro-optic modulator according to claim 9, wherein the transmission optical waveguide is located on the surface of the base board, the electric field constraint layer has a first side surface and a second side surface that are opposite to each other, and the first side surface is adjacent to the first electrode; or the first side surface is adjacent to the second electrode, and the second side surface is adjacent to the transmission optical waveguide.

11. The electro-optic modulator according to claim 9, wherein the electric field constraint layer extends to at least one of the following positions:
the first upper-layer protrusion part comprised in the first electrode, the first upper-layer recess part comprised in the first electrode, the first lower-layer protrusion part comprised in the first electrode, the first lower-layer recess part comprised in the first electrode, the second upper-layer protrusion part comprised in the second electrode, the second upper-layer recess part comprised in the second electrode, the second lower-layer protrusion part comprised in the second electrode, or the second lower-layer recess part comprised in the second electrode.

12. The electro-optic modulator according to any one of claims 1 to 8, wherein the transmission optical waveguide and the first electrode are located on two sides of the base board, and/or the transmission optical waveguide and the second electrode are located on two sides of the base board; and
the base board further comprises an electric field constraint layer, the electric field constraint layer is located between the transmission optical waveguide and the first electrode, and/or the electric field constraint layer is located between the transmission optical waveguide and the second electrode, and the electric field constraint layer is configured to enable the electric field to be mainly distributed on the transmission optical waveguide.

13. The electro-optic modulator according to any one of claims 9 to 12, wherein the electric field constraint layer is made of an insulation material with a high dielectric constant, and a material refractive index of the electric field constraint layer is less than a material refractive index of the transmission optical waveguide.

14. The electro-optic modulator according to any one of claims 1 to 13, wherein a side surface that is of the first conducting layer and that faces the base board comprises a first area and a second area, the first area is in contact with the second conducting layer, and the second area is in contact with the base board.

15. The electro-optic modulator according to any one of claims 2 to 8, wherein a side surface that is of the third conducting layer and that faces the base board comprises a third area and a fourth area, the third area is in contact with the fourth conducting layer, and the fourth area is in contact with the base board.

16. An optical module, wherein the optical module comprises a light source and the electro-optic modulator according to any one of claims 1 to 15, the light source is connected to a transmission optical waveguide, and the light source is configured to send an optical signal to the transmission optical waveguide.

17. An optical transmitting device, wherein the optical transmitting device comprises a processor and the optical module according to claim 16, the processor is connected to a signal electrode, the signal electrode is a first electrode or a second electrode, the processor is configured to send an electrical signal to the signal electrode, and the electrical signal is used to modulate an optical signal transmitted by a transmission optical waveguide.
